# EUROPÄISCHE PATENTSCHRIFT

(11) **EP 2 699 466 B1**
(45) Veröffentlichungstag und Bekanntmachung des Hinweises auf die Patenterteilung: **06.06.2018**
(21) Anmeldenummer: 12723072.0
(22) Anmeldetag: 20.04.2012
(51) Int. Cl.: B62B 15/00, A61G 1/01

(54) **ZIEH- UND TRAGBARES TRANSPORTMITTEL**
TRANSPORT AID THAT CAN BE PULLED AND CARRIED
MOYEN DE TRANSPORT POUVANT ÊTRE TIRÉ ET PORTÉ

(30) Priorität: 21.04.2011 AT 5702011
(43) Veröffentlichungstag der Anmeldung: 26.02.2014
(73) Patentinhaber: Kohlbrat & Bunz Gesellschaft m.b.H, 5550 Radstadt (AT)
(72) Erfinder: RUGFELT, Hakan, SE-23941 Falsterbo (SE)
(74) Vertreter: Torggler & Hofinger Patentanwälte
(86) Internationale Anmeldenummer: PCT/AT2012/000107
(87) Internationale Veröffentlichungsnummer: WO 2012/142636

(56) Entgegenhaltungen:
- EP-B1- 0 710 100
- CA-A1- 2 454 139
- US-A- 4 283 068
- US-A- 5 720 303

## Beschreibung

Die Erfindung betrifft ein zieh- und tragbares Transportmittel gemäß dem Oberbegriff von Anspruch 1, mit einer flexiblen Grundplatte, die im Transportzustand eingerollt, zur Aufnahme einer zu transportierenden Last flach ausgebreitet und in Verwendung zumindest längsseitig hochgezogen ist, sodass sie einen etwa U-förmigen Querschnitt aufweist, wobei zumindest entlang der beiden Längsränder der Grundplatte Löcher zur Aufnahme von Griffen, Gurten oder Schnüren vorgesehen sind und der Mittelbereich die Auflagefläche für die Last bildet, und wobei für den Transport einer verletzten Person zumindest in der Auflagefläche für den Oberkörper Haltelaschen an der Innenseite der Grundplatte vorgesehen sind, die jeweils eine Durchstecköffnung für ein in Längsrichtung aussteifendes Element als Transporthilfsmittel bilden.

Ein derartiges, von zwei Personen tragbares Transportmittel ist beispielsweise aus der US 5,720,303 bekannt, und weist einen mit längsversteifenden Elementen bestückbaren Mittelbereich zur Auflage für den Oberkörper einer verletzten Person auf. Hiezu sind mehrere parallele Taschen vorgesehen, in die die längsversteifenden Elemente eingeschoben werden können. Das Transportmittel wird für den Leertransport in Querrichtung eingerollt, wobei zuvor der Kopf- und Beinauflagebereich eingeschlagen wird, und das Transportmittel somit etwa auf die Hälfte verkürzt wird. Eine Querversteifung ist nicht möglich, und weder ein Bodentransport, bei dem das Transportmittel auf dem Boden gezogen wird, noch ein Hubschraubertransport sind vorgesehen. Eine ähnlich aufgebaute Trage ist aus der EP 0 710 100 B1 bekannt. Dort sind in längsverlaufende Taschen beiderseits der mittleren Auflagefläche jeweils zwei einander im Mittelbereich soweit überlappende Versteifungselemente eingeschoben, dass eine ausreichende Längsversteifung erreicht wird.

Aus der US 4,283,068 ist ein Transportmittel bekannt geworden, das vorwiegend zum ziehenden Transport von erlegten Tieren durch unwegsames Gelände dient. Das Transportmittel kann gerollt relativ leicht transportiert werden, wird vor Ort auf dem Boden ausgebreitet, mit der Last beladen, und dann wird ein Seil durch die Löcher an den Längsrändern gefädelt und angezogen, sodass sich die Längsränder und ein Querrand hochbiegen und die Last verschnürt wird. Am anderen Querrand durchsetzt das Seil einen hohlen Griff, an dem dann das Transportmittel über den Boden gezogen werden kann. Die insbesondere 2 bis 3 mm dicke Grundplatte besteht beispielsweise aus einem Polyethylen od. dgl., das, wenn in einer Richtung gewölbt, in der anderen Richtung relativ biegesteif und stabil ist.

Für den schleppenden Transport über einen Boden mit beliebiger, wechselnder Beschaffenheit sollte die aufliegende Seite bzw. Fläche des Transportmittels möglichst reibungsarm, glatt und geschlossen sein. Vor allem sollte kein Befestigungselement od. dgl. an dieser Außenseite angeordnet sein, das das Ziehen über den Boden sehr erschweren würden.

Für den Transport von verletzten Personen stellt ein derartiges Transportmittel nur eine absolute Notlösung dar, da es für diesen Zweck zusätzlicher Einrichtungen bedarf. Die US 5,839,137 umfasst beispielsweise eine Vielzahl von an der Innenseite der flexiblen Grundplatte in Längsrichtung, in Querrichtung und schräg dazu sich erstreckenden Gurten, die mit der Grundplatte vernäht sind, und an den Enden mit Griffen, Schnallen od. dgl. bestückt sind. Vorzugsweise wird für den etwa horizontalen Transport des Verletzten, beispielsweise hängend an einem Hubschrauber od. dgl. in das Transportmittel eine aussteifende Platte eingelegt, auf der der Verletzte gebettet wird, um die seitlich auf den Verletzten einwirkenden Kräfte, die beim Anheben des Transportmittels die Längsseiten gegeneinander drücken, gering zu halten.

Die Erfindung hat es sich nun zur Aufgabe gestellt, ein Transportmittel der eingangs genannten Art ohne die vorstehend beschriebenen Nachteile für den Bodentransport, für den Horizontaltransport durch Personen oder Hubschrauber, sowie für den Vertikaltransport mittels Hubschrauber, Seilwinden etc. in einfachster Weise geeignet zu machen.

Erfindungsgemäß wird dies dadurch erreicht, dass die Grundplatte im Transportzustand in Längsrichtung eingerollt ist und Gruppen von voneinander beabstandeten Haltelaschen aufweist, deren Durchstecköffnungen miteinander fluchten. Durch die Anbringung von Haltelaschen an der Innenseite der Grundplatte können die für den vom Boden abgehobenen Transport benötigten aussteifenden Elemente montiert werden, ohne die Gleiteigenschaften beim Bodentransport zu verschlechtern. Somit können Transporthilfsmittel an der Grundplatte verbleiben, auch wenn sie nicht verwendet werden, wodurch sich aber im Bedarfsfall ergibt, dass sie zur Verfügung stehen und nicht extra montiert werden müssen. Gerade der Zeitgewinn ist von Bedeutung, wenn Verletzte zu transportieren sind.

Die Haltelaschen können mit der Grundplatte auf jede geeignete Weise verbunden sein. Sind die Grundplatte und die Haltelaschen aus schweißbarem Kunststoff, so ist die Verschweißung möglich; weiters können sie miteinander verklebt werden, wenn für die Materialien entsprechende Klebstoffe vorhanden sind. Eine bevorzugte Befestigung, die auch zusätzlich zum Verschweißen oder Verkleben angewendet werden kann, besteht darin, die Haltelaschen mit der Grundplatte zu vernieten.

Als aussteifende Elemente, die durch die Durchstecköffnungen der Haltelaschen geschoben werden können, sind bevorzugt flexible Glasfaserstäbe vorgesehen. Zumindest ein derartiges Element kann als Querversteifung der Auflagefläche für den Oberkörper eingesetzt werden, sodass beim Anheben der sich zu einer U-förmigen Rinne verformenden Grundplatte der Brustkorb des Verletzten nicht eingequetscht bzw. eingeklemmt wird. Als Längsversteifung für die Auflagefläche für den Oberkörper können in einer weiteren bevorzugten Ausführung zwei Elemente, insbesondere wiederum flache Glasfaserstäbe parallel nebeneinander in der Längsrichtung durch die Durchstecköffnungen von Haltelaschen eingeschoben sein. Diese schützen den Rücken des Verletzten beim Ziehen über einen unebenen Boden, insbesondere über Kanten an Steinen od. dgl., sind aber nicht erforderlich, wenn das Transportmittel nur getragen oder gehoben wird.

Als weitere Transporthilfsmittel können in einer weiteren bevorzugten Ausführung durch die Durchstecköffnungen von Haltelaschen zwei Traggurten gefädelt werden, die zum horizontalen Transport mittels eines Hubschraubers in einem gemeinsamen Aufhängering enden, wobei die Traggurten erst im Bereich der Längsränder der Grundplatte durch Schlitze beidseitig nach außen geführt sind. Die Traggurte können daher ständig an der Grundplatte verbleiben, ohne zu stören. Wenn bei Nichtgebrauch die Grundplatte in Längsrichtung eingerollt werden soll, sodass die Rollenlänge nur die Breite der Grundplatte umfasst, werden die längsversteifenden Elemente für die Auflagefläche herausgezogen und können in die Rolle eingewickelt werden, da ihre Länge bevorzugt nur der Breite der Grundplatte entspricht. Hingegen können querversteifende Elemente ebenso wie die Traggurte für den Hubschraubertransport sowie die übrigen Transporthilfsmittel, wie die Griffe oder Verbindungsgurte zum Fixieren des Verletzten im Transportmittel beim Einrollen verbleiben.

Nachstehend wird nun die Erfindung anhand der Figuren der beiliegenden Zeichnungen näher beschrieben, ohne darauf beschränkt zu sein. Es zeigen:
- Fig. 1: eine Draufsicht auf die Grundplatte des Transportmittels in ausgebreiteter Stellung,
- Fig. 2: eine Schrägansicht des Transportmittels in der Stellung für den horizontalen Transport,
- Fig. 3: den eingerollten Ruhezustand des Transportmittels, und
- Fig. 4: einen vergrößerten Ausschnitt mit einer Haltelasche.

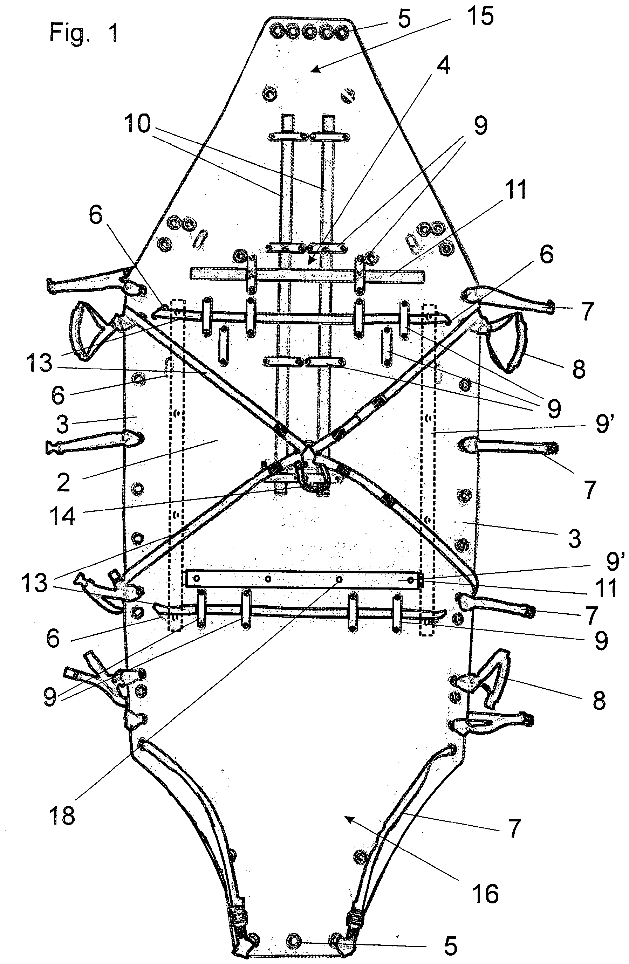

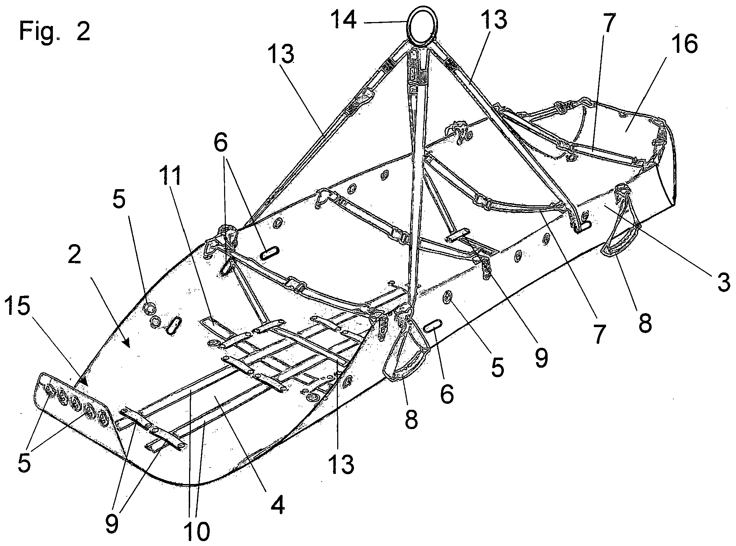

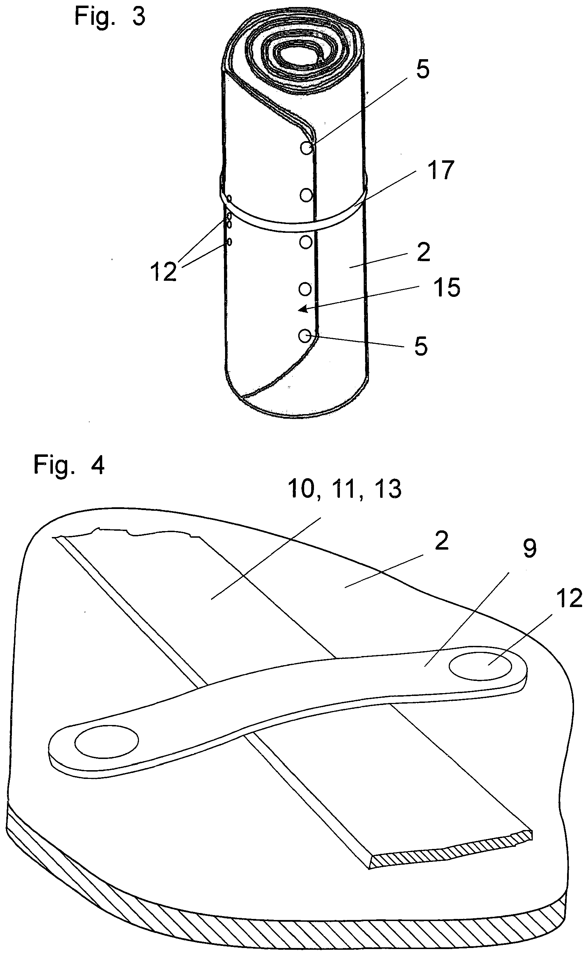

Die ausgebreitete Grundplatte 2 des Transportmittels, die für den leeren Transport bei Nichtgebrauch in der in Fig. 3 ersichtlichen Weise gerollt und durch ein Band 17 fixiert sein kann, wobei es egal ist, ob der Kopfbereich 15 oder Fußbereich 16 außen ist, weist, wie in der Draufsicht nach Fig. 1 ersichtlich, alle wesentlichen Teile und Hilfsmittel entweder an der Innenseite oder entlang der Längsränder 3 und Querränder des Kopf- bzw. Fußbereiches 15, 16 auf, an denen sie in Verwendung des Transportmittels gemäß Fig. 2 nicht mit dem Untergrund in Berührung kommen, da alle Randbereiche 3, 15, 16 hochgebogen sind.

Im Einzelnen sind an der Grundplatte 2 entlang der Längsränder 3 Löcher 5 zur Aufnahme 4 von Gurten 7 für die Festlegung des Verletzten und von Griffen 8 für den horizontalen Transport per Hand sowie Schlitze 6 ausgebildet, auf die weiter unten näher eingegangen wird. Weitere Löcher 5 im Kopf- und Fußbereich 15, 16 dienen zum Schließen der U-Form der Grundplatte 2 in der Verwendung nach Fig. 2, sodass der Aufnahmeraum für den Verletzten allseitig abgeschlossen ist. Die Löcher 5 im Kopfbereich 15 können auch für die Aufhängung beim vertikalen Transport an einem Bergeseil od. dgl. verwendet werden.

Die Auflagefläche 4 für den Verletzten weist im Bereich des Oberkörpers eine Reihe von Haltelaschen 9 auf, die im Detail in Fig. 4 gezeigt sind. Die Haltelaschen 9 sind mit der Grundplatte 2 insbesondere vernietet, könnten aber auch verschweißt oder verklebt sein. Die Nietenköpfe 12 sind mit der Außenfläche der Grundplatte 2 bündig, sodass deren Gleiteigenschaften nicht spürbar verändert sind.

Die Haltelaschen 9 bilden Durchstecköffnungen und sind in einer bestimmten Anordnung und Verteilung, sodass einerseits versteifende Elemente 10, 11 eingesetzt werden können, beispielsweise zwei Elemente 10 parallel in Längsrichtung und ein Element 11 in Querrichtung. Diese Elemente 10, 11 sind bevorzugt flache Glasfaserstäbe. Das Querelement 11 verhindert das Einquetschen des Brustkorbes des Verletzten und kann in der Position verbleiben, auch wenn die Grundplatte 2 eingerollt wird. Die Längselemente 10 müssen hierfür herausgezogen werden, und weisen eine Länge auf, die etwa der Breite der Grundplatte 2 entspricht.
Weitere Haltelaschen 9 bilden Durchstecköffnungen für zwei Traggurte 13, deren beide Enden jeweils durch die längsrandnahen Schlitze 6 nach außen gefädelt sind und mit einem gemeinsamen Aufhängering 14 für den horizontalen Transport an einem Hubschrauber od. dgl. verbunden sind. Auch die Traggurte 13 können ständig an der Grundplatte 2 verbleiben, da sie nur an den beim Ziehen über den Boden nicht mit den Boden in Berührung kommenden Längsrändern nach außen geführt sind, nicht aber im Mittelbereich.

In Fig. 1 ist weiters auch eine durch die nachfolgenden Patentansprüche nicht erfasste, alternative Ausführung von Haltelaschen 9' gezeigt, die aus zwei miteinander entlang der Ränder zu einem Schlauch oder einer Hülle verbundenen Gurten gebildet sind, sodass die Durchstecköffnungen sich über die ganze Länge der Haltelasche 9' erstrecken. Der auf der Grundplatte 2 aufliegende Gurt der Haltelasche 9' ist mit der Grundplatte 2 vernietet, und an den Nietstellen ist der obere Gurt mit Löchern 18 versehen, durch die das Nietwerkzeug eingeführt werden kann. Die Haltelasche 9' kann ebenfalls ein aussteifendes Element 11 bzw. auch einen Traggurt 13 aufnehmen. Derartige Haltelaschen 9' können auch in Längsrichtung beispielsweise am Längsrandbereich vorgesehen werden, wie strichliert gezeigt ist.

## Patentansprüche

1. Zieh- und tragbares Transportmittel mit einer flexiblen Grundplatte (2), die im Transportzustand eingerollt, zur Aufnahme einer zu transportierenden Last flach ausgebreitet und in Verwendung zumindest längsseitig hochgezogen ist, sodass sie einen etwa U-förmigen Querschnitt aufweist, wobei zumindest entlang der beiden Längsränder (3) der Grundplatte (2) Löcher (5) zur Aufnahme von Griffen (8), Gurten (7) oder Schnüren vorgesehen sind und der Mittelbereich die Auflagefläche (4) für die Last bildet, und wobei für den Transport einer verletzten Person zumindest in der Auflagefläche für den Oberkörper Haltelaschen (9) an der Innenseite der Grundplatte (2) vorgesehen sind, die jeweils eine Durchstecköffnung für ein Transporthilfsmittel bilden, wobei Durchstecköffnungen für in Längsrichtung aussteifende Elemente ausgebildet sind, **dadurch gekennzeichnet, dass** die Grundplatte (2) im Transportzustand in Längsrichtung eingerollt ist, und Gruppen von voneinander beabstandeten Haltelaschen (9) aufweist, deren Durchstecköffnungen miteinander fluchten.

2. Transportmittel nach Anspruch 1, **dadurch gekennzeichnet, dass** in Querrichtung zumindest ein aussteifendes Element (11) über etwa die halbe Breite der Grundplatte (2) in die Haltelaschen (9) eingesetzt ist.

3. Transportmittel nach Anspruch 1, **dadurch gekennzeichnet, dass** durch in Querrichtung fluchtende Durchstecköffnungen der Haltelaschen (9) Traggurte (13) gefädelt sind, die an den Längsrändern (3) durch Schlitze (6) in der Grundplatte (2) nach außen geführt und in einem gemeinsamen Aufhängering (14) enden.

4. Transportmittel nach einer der Ansprüche 1 bis 3, **dadurch gekennzeichnet, dass** die Haltelaschen (9) mit der Grundplatte (2) vernietet sind.

5. Transportmittel nach einer der Ansprüche 1 bis 4, **dadurch gekennzeichnet, dass** auch die Ränder des Kopf- bzw. Fußbereiches (15, 16) hochgebogen und mit Löchern (5) versehen sind, die zum Schließen der U-Form der Grundplatte (2) dienen.

## Claims

1. Transporting means that can be pulled and carried, with a flexible base plate (2), which is rolled up in transportation mode, is spread out flat to accommodate a load to be transported and is raised at least at its longitudinal sides during use, with the result that it has an approximately U-shaped cross-section, wherein holes (5) to accommodate handles (8), belts (7) or cords are provided at least along the two longitudinal edges (3) of the base plate (2), and the central area forms the bearing surface (4) for the load, and wherein, to transport an injured person retaining straps (9) for the upper body are provided on the inside of the base plate (2) at least in the bearing surface, each of which retaining straps (9) forms a push-through opening for a transporting aid, wherein push-through openings are formed for elements stiffening in longitudinal direction, **characterized in that** the base plate (2) is rolled up in longitudinal direction in transportation mode, and has groups of retaining straps (9) spaced apart from one another the push-through openings of which are aligned.

2. Transporting means according to claim 1, **characterized in that** in transverse direction at least one stiffening element (11) is inserted into the retaining straps (9) over approximately half the width of the base plate (2).

3. Transporting means according to claim 1, **characterized in that** carrying straps (13) are threaded through push-through openings, aligned in transverse direction, of the retaining straps (9), which carrying straps (13) [are] guided out through slits (6) in the base plate (2) at the longitudinal edges (3) and end in a shared hanging ring (14).

4. Transporting means according to one of claims 1 to 3, **characterized in that** the retaining straps (9) are riveted to the base plate (2).

5. Transporting means according to one of claims 1 to 4, **characterized in that** the edges of the head and/or foot region (15, 16) are also bent up and provided with holes (5), which serve to close the U shape of the base plate (2).

## Revendications

1. Moyen de transport pouvant être tiré et porté, avec une plaque de base (2) flexible, laquelle est enroulée dans l'état de transport, laquelle est étalée à plat en vue de la réception d'une charge à transporter et laquelle est tout au moins relevée sur les côtés longitudinaux quand elle est utilisée, de telle sorte qu'elle présente une section transversale à peu près en forme de « U » ;
selon lequel des trous (5) sont prévus, tout au moins le long des deux bordures longitudinales (3) de la plaque de base (2), en vue de la réception de poignées (8), de sangles (7) ou de cordons et la région centrale forme la surface de support (4) pour la charge ; et
selon lequel des languettes de maintien (9) sont prévues au niveau de la face intérieure de la plaque de base (2) pour le transport d'une personne blessée, tout au moins dans la surface de support pour le torse, lesquelles languettes de maintien (9) forment respectivement une ouverture de traversée pour un moyen d'aide au transport ;
selon lequel des ouvertures de traversée sont conçues pour des éléments de raidissement dans la direction longitudinale ;
**caractérisé en ce que** la plaque de base (2) est enroulée dans la direction longitudinale, quand elle se trouve dans l'état de transport, et présente des groupes de languettes de maintien (9), lesquelles sont espacées les unes des autres et dont les ouvertures de traversée sont alignées les unes par rapport aux autres.

2. Moyen de transport selon la revendication 1, **caractérisé en ce que**, dans la direction transversale, tout au moins un élément de raidissement (11) est inséré dans les languettes de maintien (9), sur à peu près la moitié de la largeur de la plaque de base (2).

3. Moyen de transport selon la revendication 1, **caractérisé en ce que**, dans la direction transversale, des sangles de transport (13) sont enfilées à travers les ouvertures de traversée alignées des languettes de maintien (9), lesquelles sangles de transport (13) sont guidées vers l'extérieur dans la plaque de base (2), à travers des fentes (6) au niveau des bordures longitudinales (3) et lesquelles sangles de transport (13) se terminent dans une bague de suspension (14) commune.

4. Moyen de transport selon l'une des revendications 1 à 3, **caractérisé en ce que** les languettes de maintien (9) sont rivetées avec la plaque de base (2).

5. Moyen de transport selon l'une des revendications 1 à 4, **caractérisé en ce que** les bords de la zone de la tête ou des pieds (15, 16) sont également recourbés vers le haut et sont pourvus de trous (5) qui servent à l'obturation de la forme en « U » de la plaque de base (2).
